# EUROPEAN PATENT SPECIFICATION

(11) **EP 2 913 451 B1**
(45) Date of publication and mention of the grant of the patent: **04.12.2019**
(21) Application number: 13840892.7
(22) Date of filing: 27.09.2013
(51) Int. Cl.: E03F 3/06, E03F 7/00, F16L 55/16, F16L 55/165

(54) **PIPE INNER-LAYER STRUCTURE AND CONNECTION MEMBER USED THEREIN**
ROHRINNENAUSKLEIDUNGSSTRUKTUR UND VERBINDUNGSELEMENT DAFÜR
STRUCTURE DE COUCHE INTERNE DE TUYAU, ET ÉLÉMENT DE RACCORDEMENT UTILISÉ À L'INTÉRIEUR DE CELLE-CI

(30) Priority: 28.09.2012 JP 2012217386
(43) Date of publication of application: 02.09.2015
(73) Proprietor: Takiron Engineering Co. Ltd., Osaka-shi, Osaka 530-0001 (JP); Takiron Co., Ltd., Osaka 530-0001 (JP)
(72) Inventor: MORITA, Yoshinobu, Osaka-shi Osaka 530-0001 (JP); KUROKAWA, Yuji, Osaka-shi Osaka 530-0001 (JP); MAYAMA, Junya, Osaka-shi Osaka 530-0001 (JP); NISHITANI, Tomoyuki, Osaka-shi Osaka 530-0001 (JP); YASUI, Akira, Osaka-shi Osaka 530-0001 (JP); HAYAKAWA, Susumu, Osaka-shi Osaka 530-0001 (JP)
(74) Representative: Hoffmann Eitle
(86) International application number: PCT/JP2013/076234
(87) International publication number: WO 2014/051041

(56) References cited:
- EP-A1- 0 556 824
- EP-A1- 2 090 708
- WO-A1-98/11374
- WO-A1-2006/135193
- JP-A- H0 834 017
- JP-A- 2002 310 378
- JP-A- 2006 316 539

## Description

### Technical Field

The present invention relates to a pipe inner-layer structure and a connection member for use in the pipe inner-layer structure, and more particularly, to a pipe inner-layer structure that is suitable for repairing a relatively large-diameter pre-installed pipe, such as a sewerage pipe, and a connection member used in the pipe inner-layer structure.

### Background Art

In the past, many repair structures for a pre-installed pipe, in which the inner surface of a pre-installed pipe is thoroughly covered with a lining material, have been proposed as a repair structure for a pre-installed pipe such as a decrepit sewerage pipe (for example, see Patent Documents 1 and 2).

Among the repair structures, a repair structure disclosed in Patent Document 1 is constructed by using blocks for repairing a flow channel in which an inner surface plate and an outer peripheral plate are integrally made of plastic. The inner surface plate is formed into a cylindrical body having the shape of a pipe, a square, or a horseshoe when assembled and forms an inner peripheral surface; and the outer peripheral plate stands at the peripheral edge of the inner surface plate. Further, a repair structure disclosed in Patent Document 2 is formed as follows: a hollow frame-shaped reinforcing member substantially parallel with the inner surface of a pre-installed pipe line is disposed in the pre-installed pipe line; a plurality of inner-surface members are continuously mounted on the inside of the reinforcing member in a longitudinal direction and a circumferential direction of the pre-installed pipe line and are assembled in a cylindrical shape; while end faces of inner-surface members adjacent to each other in the longitudinal direction of the pre-installed pipe line come into contact with each other, the inner-surface members are connected to each other by an inner surface material-connecting material that is disposed across both of the inner-surface members; and a curable filler fills a space between the inner-surface members and the inner surface of the pre-installed pipe line.

However, since the blocks made of a synthetic resin are used in the repair structure disclosed in Patent Document 1, expensive molds are required. For this reason, the repair structure disclosed in Patent Document 1 has high cost and requires a lot of labor to assemble the plurality of blocks. Further, the repair structure disclosed in Patent Document 2 solves problems related transport or manufacturing facilities, the installation space in a manufacturing site, and the like when continuous bodies of the inner-surface members and fitting portions in the longitudinal direction are used as the repair length of the pre-installed pipe line is increased. However, since the reinforcing member includes a plurality of members in the disposition of the hollow frame-shaped reinforcing member in the pre-installed pipe line, a lot of labor is required to assemble the reinforcing member in the pre-installed pipe line. Further, since the number of inner-surface members is also large, a lot of labor is required in order to lock the inner-surface members to many fitting portions.

Meanwhile, in consideration of these circumstances, the following repair structure is proposed as a repair structure for a pre-installed pipe that uses economical members, simplifies installation work by saving labor in assembling the economical members, and has durability over a long period of time even after the completion of work. This repair structure includes rigid rings that are disposed in a circumferential direction of an inner peripheral surface of a pre-installed pipe at given intervals in a pipe-axial direction; rigid straight members having notches formed at given intervals on the center side of the pre-installed pipe disposed at given intervals in the circumferential direction of the rigid rings in the pipe-axial direction so as to be provided over the inside of these rigid rings; and band-like synthetic resin inner surface materials that include projected stripes corresponding to the notches of the rigid straight members. The synthetic resin inner surface materials are closely disposed in sequence in the pipe-axial direction along the circumferential direction of the inner peripheral surface of the pre-installed pipe by fitting the projected stripes of the synthetic resin inner surface materials to the notches of the rigid straight members, and a gap formed between the pre-installed pipe and each synthetic resin inner surface material is filled with a curable filler (for example, see Patent Document 3). Since the synthetic resin inner surface materials are disposed along the circumferential direction of the inner peripheral surface of the pre-installed pipe, there are problems in that the inner surface materials cannot be accurately disposed such that unevenness is not formed in the pipe-axial direction and a lot of trouble is generated in the disposition of the inner surface materials as the repair length of the pre-installed pipe line is increased.

### Citation List

### Patent Documents

Patent Document 1: JP-A-2003-286742
Patent Document 2: JP-A-2002-310378
Patent Document 3: JP-A-2006-316539

EP 2 090 708 A1 discloses features falling under the preamble of claim 5. WO 2006/135193 A1 is further prior art.

### Summary of Invention

### Problems to Be Solved by Invention

The invention has been made in consideration of these circumstances, and an object of the invention is to provide a pipe inner-layer structure that allows inner surface materials to be accurately disposed, includes inner surface materials, simplifies installation work by saving labor in assembling component members, and has durability over a long period of time even after the completion of work, and a connection member used in the pipe inner-layer structure.

### Means for Solving the Problems

In order to achieve the above object, a pipe inner-layer structure of a pipe according to the invention and claim 1 includes: fixed members that are installed along an inner peripheral surface of a pipe at intervals in a pipe-axial direction; connection members that are disposed on the fixed members and include first fitting portions to which an inner surface material is fitted; and the inner surface material in a shape of a band, which is fitted to the first fitting portions of the connection members and is provided across fixed members adjacent to each other in the pipe-axial direction, wherein the connection members are adapted so as to be divided and disposed on the fixed members and include second fitting portions for installing the connection members on the fixed members.

In this aspect, the connection members may be disposed so that the positions of the connection members are adjusted along the fixed member by the second fitting portion.

Surfaces of the connection members on which the first fitting portions are formed may be formed so as to be flush with each other.

Each of the connection members may include a plurality of second fitting portions.

Further, a connection member used in a pipe inner-layer structure according to the invention is a connection member according to claim 5, which is used to join a fixed member installed along an inner peripheral surface of a pipe to an inner surface material, the connection member, includes: a first fitting portion which is formed in a shape of a band as a whole and to which the inner surface material is fitted; and a second fitting portion that is installed on the fixed member.

In this aspect, a fitting direction of the first fitting portion and a fitting direction of the second fitting portion are directions orthogonal to each other.
the second fitting portion includes a U-shaped groove that is to be fitted to the fixed member.
the connection member may include a plurality of second fitting portions, and opening directions of U-shaped grooves of the respective second fitting portions may be directions that are different from each other by 180° on both sides of a reference point.

The U-shaped groove of the second fitting portion may have a length that allows the U-shaped groove to be fitted to two fixed members arranged side by side.

The connection member includes a plurality of first and second fitting portions, and the first and second fitting portions are provided at the same positions in a longitudinal direction of the band-like connection member.

Connection members may be integrally connected to each other in a circumferential direction of a pipe by a connection piece.

The connection piece may have a function as a spacer that adjusts a distance between end portions of connection members adjacent to each other in a circumferential direction of the pipe.

### Advantageous Effects of Invention

According to a pipe inner-layer structure of the invention and a connection member used in the pipe inner-layer structure, the connection members are adapted so as to be divided and disposed on the fixed members and include second fitting portions for installing the connection members on the fixed members. Accordingly, it is possible to accurately dispose the connection members along the fixed members disposed along the inner peripheral surface of the pipe, to allow the band-like inner surface material to be provided across fixed members adjacent to each other in the pipe-axial direction, and to accurately dispose the inner surface materials such that unevenness is not formed in the pipe-axial direction.

Further, it is possible to provide a pipe inner-layer structure that includes inner surface materials, simplifies installation work by saving labor in assembling component members, and has durability over a long period of time even after the completion of work.

Furthermore, since the connection member is disposed so that the position of the connection member is adjusted along the fixed member by the second fitting portion, it is possible to dispose the connection members along the fixed member with a degree of freedom.

Moreover, since surfaces of the connection members on which the first fitting portions are formed are formed so as to be flush with each other, it is possible to accurately dispose the inner surface materials so that workability is high and unevenness is not formed in the circumferential direction.

Further, since each of the connection members includes a plurality of second fitting portions, it is possible to more accurately dispose the connection members along the fixed member.

Furthermore, since the fitting direction of the first fitting portion and the fitting direction of the second fitting portion are directions orthogonal to each other, it is possible to stably maintain the fitting state of each of the first fitting portions and the second fitting portions.

Moreover, since the second fitting portion includes a U-shaped groove that is fitted to the fixed member, it is possible to easily fit the second fitting portion to the fixed member and to stably maintain the fitting state of the second fitting portion.

Further, since the connection member includes a plurality of second fitting portions and the opening directions of the U-shaped grooves of the respective second fitting portions are directions that are different from each other by 180° on both sides of a reference point, it is possible to easily fit the second fitting portions to the fixed member by rotating the connection members while using the reference point as a rotation center.

Further, since the U-shaped groove of the second fitting portion has a length that allows the U-shaped groove to be fitted to two fixed members arranged side by side, it is possible to stably fit the second fitting portions to two fixed members, which are arranged side by side, at a connection portion.

Furthermore, the connection member includes a plurality of first and second fitting portions and the first and second fitting portions are provided at the same positions in a longitudinal direction of the band-like connection member. Accordingly, since a force, which is applied to the first fitting portions when the inner surface material is fitted, is supported by the fixed member through the second fitting portions, the connection members are not bent by the force and the inner surface material can be reliably fitted to the first fitting portions of the connection members.

Moreover, since the connection members are integrally connected to each other in a circumferential direction of a pipe by a connection piece, it is possible to improve the integrity of the connection members.

Further, the connection piece has a function as a spacer that adjusts a distance between end portions of connection members adjacent to each other in the circumferential direction of the pipe. Accordingly, since a deviation between the dimension of the connection member and the dimension of the inner surface material, which is caused by a difference in the curvature of the pipe on which the connection members and the inner surface materials are mounted, can be absorbed by the connection piece having a function as a spacer, it is possible to reliably fit the inner surface material to the first fitting portions of the connection members.

### Brief Description of Drawings

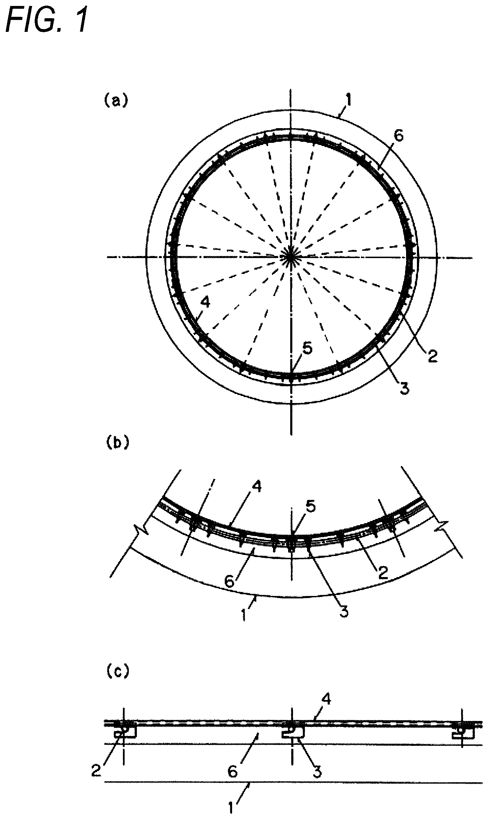

Fig. 1 shows an embodiment of a pipe inner-layer structure of the invention, (a) is a cross-sectional view of a pipe, (b) is an enlarged view of a cross-section of the pipe, and (c) is an enlarged view of a longitudinal section of the pipe.

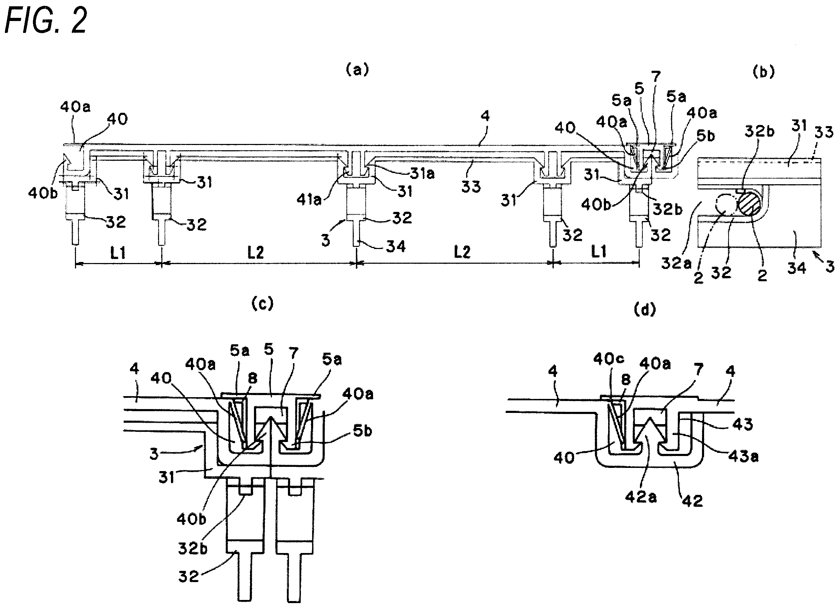

Fig. 2 shows a state in which fixed members, connection members, an inner surface material, and an inner surface material-connecting material are assembled, (a) is a longitudinal sectional view of the pipe (the fixed members are omitted), (b) is a cross-sectional view of the pipe (the inner surface material and the inner surface material-connecting material are omitted), (c) is a longitudinal sectional view of main parts of the pipe, and (d) is a longitudinal sectional view of main parts of a pipe according to another embodiment.

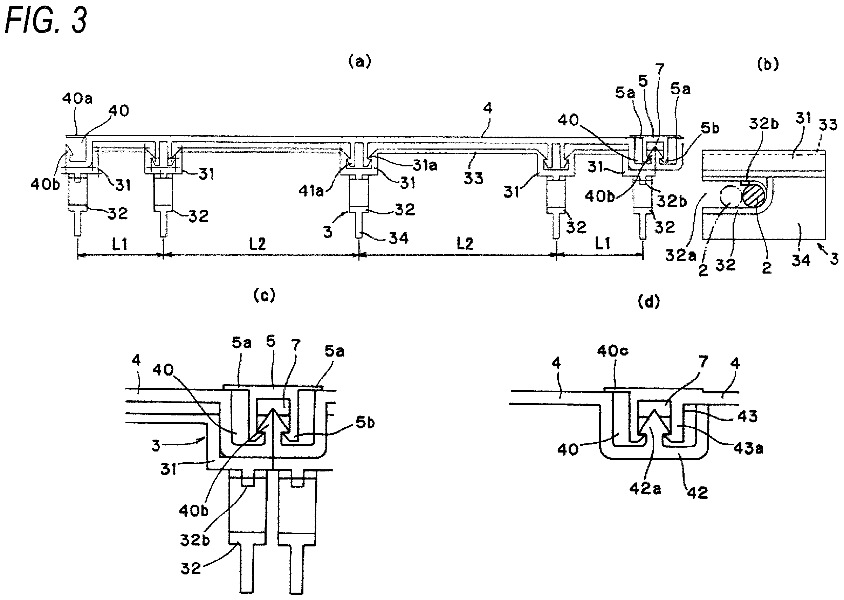

Fig. 3 shows a state in which the fixed members, the connection members, the inner surface material, and the inner surface material-connecting material are assembled, (a) is a longitudinal sectional view of the pipe (the fixed members are omitted), (b) is a cross-sectional view of the pipe (the inner surface material and the inner surface material-connecting material are omitted), (c) is a longitudinal sectional view of main parts of the pipe, and (d) is a longitudinal sectional view of main parts of a pipe according to another embodiment.

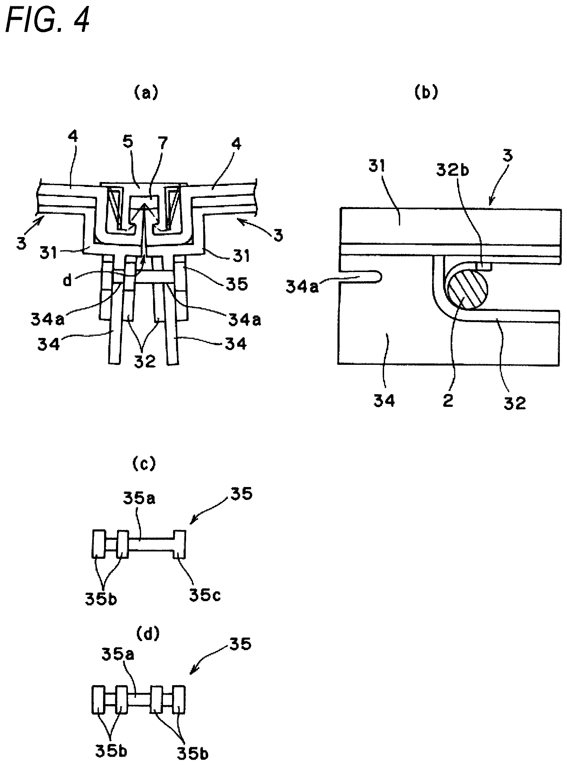

Fig. 4 shows a connection structure that connects adjacent connection members, (a) is a longitudinal sectional view of the pipe (the fixed members are omitted), (b) is a cross-sectional view of the pipe (the inner surface material and the inner surface material-connecting material, and a connection piece are omitted), and (c) and (d) are views showing the connection piece.

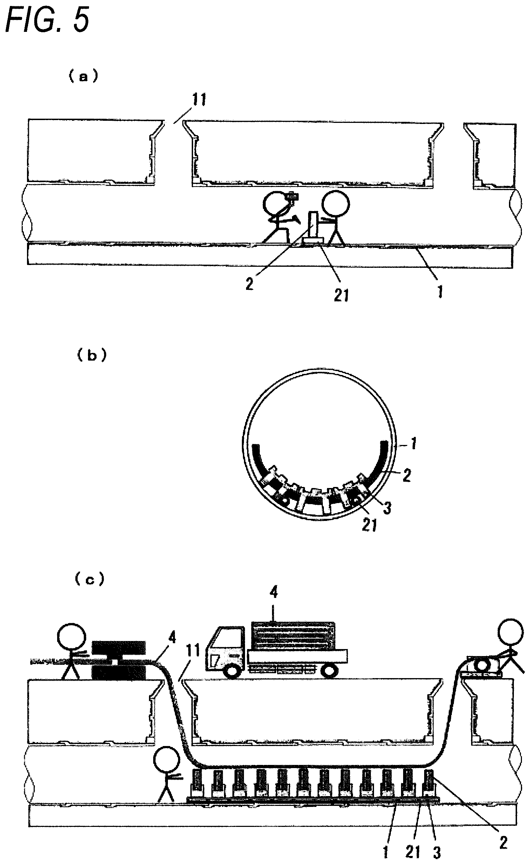

Fig. 5 is a view showing a construction procedure of the pipe inner-layer structure of the invention.

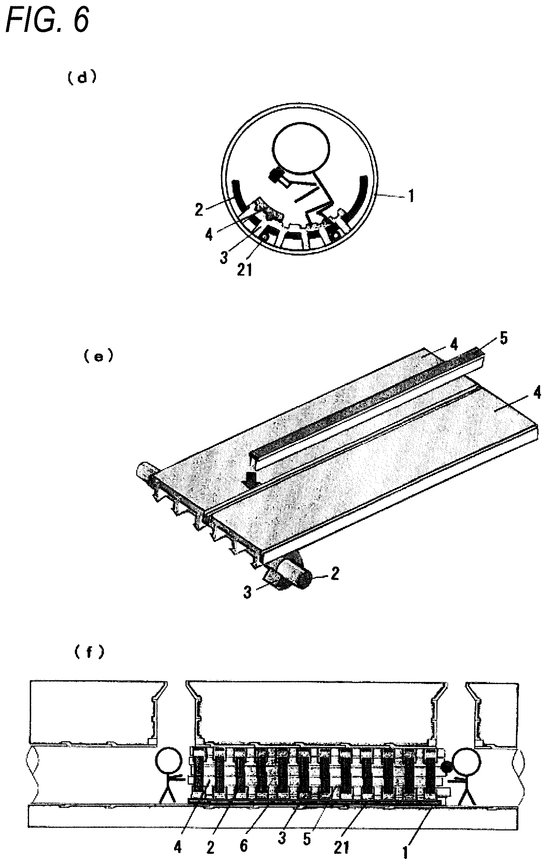

Fig. 6 is a view showing a construction procedure of the pipe inner-layer structure of the invention.

### Description of Embodiments

Embodiments of a pipe inner-layer structure of the invention and a connection member used in the pipe inner-layer structure will be described below with reference to the drawings.

Figs. 1 to 6 show an embodiment in which a pipe inner-layer structure of the invention is applied to a pre-installed pipe such as a decrepit sewerage pipe to repair the pre-installed pipe.

The pipe inner-layer structure includes: fixed members 2 that are installed along an inner peripheral surface of a pre-installed pipe 1 at intervals in the pipe-axial direction of the pre-installed pipe 1; band-like connection members 3 which are disposed on the fixed members 2 and which includes first fitting portions 31 to which an inner surface material 4 is fitted and second fitting portions 32 installed on the fixed members 2; and a band-like inner surface material 4 that is fitted to the first fitting portions 31 of the connection members 3 and is provided across fixed members 2 adjacent to each other in the pipe-axial direction of the pre-installed pipe 1. The connection members 3 are formed so as to be divided and are disposed on the fixed members 2 through the second fitting portions 32 which are included in the respective connection members 3.

In this case, the pipe inner-layer structure of the invention is not limited to a pipe having a circular cross-section as in this embodiment, and can also be applied to a pipe that has an arbitrary shape such as a rectangular shape.

When the fixed members 2 are installed in the shape along the inner peripheral surface of the pre-installed pipe 1, preferably, installed along the inner peripheral surface of the pre-installed pipe 1, steel such as rod-like members formed of a plurality of curved reinforcing bars, preferably, deformed reinforcing bars, and shaped steel or the like can be suitably used as the fixed members 2 so that the fixed members 2 are installed to have a substantially constant interval from the inner peripheral surface of the pre-installed pipe 1. As shown in Fig. 5(a), the fixed members 2 are installed in the circumferential direction of the pre-installed pipe 1 by arbitrary fixing members 21 such as anchors while being assembled in the shape of a closed loop.

Accordingly, since the fixed members are easily installed, workability is good. Further, since a reinforcing bar or shaped steel is a general-purpose material, the cost of materials is low.

As shown in Fig. 2, the connection members 3 are adapted so as to be divided and disposed on one fixed member 2; and include one or a plurality of first fitting portions 31 to which the inner surface material 4 is fitted (in this embodiment, a total of five first fitting portions 31, that is, two first fitting portions 31 provided at both end portions and three first fitting portions 31 provided between the both end portions) and second fitting portions 32 which are installed on the fixed member 2. These connection members 3 are connected in the shape of a band by connecting pieces 33.

In this case, it is preferable that the longitudinal direction of the band-like connection members 3, the fitting direction of the first fitting portion 31, and the fitting direction of the second fitting portion 32 are orthogonal to one another.

Accordingly, it is possible to stably maintain the fitting state of each of the first fitting portions 31 and the second fitting portions 32 and to stably maintain the connection state of the plurality of connection members 3 by making the fitting direction of the first fitting portion 31 and the fitting direction of the second fitting portion 32 be directions orthogonal to each other.

The first and second fitting portions 31 and 32 do not necessarily need to be provided so as to correspond to each other, however, it is preferable that the first and second fitting portions 31 and 32, the total number of each of which is in the range of 3 to 7 (for example, per width of 30 cm), are provided in the vicinity of both end portions of the band-like connection members 3 and at other positions according to the length of the band-like connection members 3 in the longitudinal direction.

When the first and second fitting portions 31 and 32 are provided at only both end portions (the number of each of the provided first and second fitting portions is two), a gap between the connection member 3 and the fixed member 2 or the inner surface material 4 is large in the vicinity of the middle of the connection members 3. For this reason, that is not preferable. Here, the second fitting portions 32 provided in the middle portion function to prevent the fixed member 2 from rotating around the fixed member 2.

Meanwhile, when the number of each of the provided first and second fitting portions is eight or more, a gap between the connection member 3 and the fixed member 2 or the inner surface material 4 is small but workability deteriorates and a lot of materials are required. For this reason, that is not preferable.

Further, when the connection members 3 include a plurality of first and second fitting portions 31 and 32, it is preferable that the first and second fitting portions 31 and 32 are provided at the same positions in the longitudinal direction of the band-like connection members 3.

Accordingly, since a force, which is applied to the first fitting portions 31 when the inner surface material 4 is fitted, is supported by the fixed member 2 through the second fitting portions 32, the connection members 3 are not bent by this force and the inner surface material 4 can be reliably fitted to the first fitting portions 31 of the connection members 3.

The material of the connection member 3 is not particularly limited, and the connection member can be made of a synthetic resin or metal having been subjected to a surface treatment. However, a synthetic resin can be suitably used in consideration of weight, easy manufacture, and the like. Particularly, a synthetic resin having chemical resistance, abrasion resistance, and alkaline resistance is used to repair sewerage pipes. Examples of such a synthetic resin include high-density polyethylene, polypropylene, and polyvinyl chloride. Meanwhile, components made of a synthetic resin, such as high-density polyethylene, polypropylene, or vinyl chloride, can be suitably used to repair other members other than sewerage pipes.

The connection member 3 can be manufactured by a well-known arbitrary method. When the synthetic resin is a thermoplastic resin, the connection member can be manufactured by, for example, injection molding. When the material of the connection member is metal, the connection member can be manufactured by, for example, welding or casting.

The first fitting portion 31, to which the inner surface material 4 is fitted, of the connection member 3 is formed in a shape that is opened upwardly, and locking claws 31a, which are engaged with locking claws 41a formed on the inner surface material 4, are formed at opening portions of three first fitting portions 31 provided in the middle portion so that the inner surface material 4 is fitted to the first fitting portions 31 so as to be retained.

Meanwhile, the lengths of the locking claws 31a and 41a (the dimensions of the locking claws 31a and 41a in the height direction) can be appropriately determined, but it is preferable that the lengths are shorter so that the capacity of flow is not reduced due to the excessive reduction of the diameter of a repaired pipe in comparison with the diameter of the pre-installed pipe 1.

Further, the first fitting portions 31 provided at both end portions are not provided with the locking claws 31a, and are connected by an inner surface material-connecting material 5 that allows end edges of adjacent inner surface materials 4 to be fitted to each other so as to be retained.

For this purpose, the positions of the connection members 3 correspond to the positions of both end portions of the inner surface material 4 in the circumferential direction of the pre-installed pipe 1.

Accordingly, the inner surface material 4 is easily positioned, such that workability is improved.

In this case, in order to make the positions of the connection members 3 correspond to the positions of both end portions of the inner surface material 4 in the circumferential direction of the pre-installed pipe 1, it is also possible to make the length of the connection members 3 be an integer multiple of the width of the inner surface material 4 and to form portions, to which both edges of the inner surface material 4 are fitted, at an appropriate position of the connection member 3 or to make the width of the inner surface material 4 be an integer multiple of the length of the connection members 3, in addition to making the lengths and widths of the connection members 3 and the inner surface material 4 in the circumferential direction of the pre-installed pipe 1 be the same.

Further, it is preferable that a gap between the connection member 3 and the inner surface material 4 is in the range of 1 to 10 mm.

It is not preferable that the gap is smaller than 1 mm, since it is difficult to absorb a deviation between the position of the first fitting portion 31 of the connection member 3 and the position of a member to be fitted of the inner surface material 4 due to dimension errors of the connection member 3 and the inner surface material 4. Meanwhile, it is not preferable that the gap exceeds 10 mm, since the capacity of flow is not reduced due to the excessive reduction of the diameter of a repaired pipe in comparison with the diameter of the pre-installed pipe 1.

Further, the second fitting portion 32, which is installed on the fixed member 2, includes a U-shaped groove of which an opening 32a to which the fixed member 2 is fitted is formed in a lateral direction (the pipe-axial direction of the pre-installed pipe 1), and a stabilizer 34 also functioning as a reinforcing rib, which has dimensions allowing the reinforcing ribs to come into contact with the inner peripheral surface of the pre-installed pipe 1 or has dimensions smaller than the above-mentioned dimensions, is formed along the outer surface of the second fitting portion 32.

The second fitting portion 32 including the U-shaped groove has a length that allows the second fitting portion 32 to be fitted to two fixed members 2, which are arranged side by side, as shown in Fig. 2(b).

Accordingly, the second fitting portion 32 can be stably fitted to the fixed member 2 so as to hold two fixed members 2, which are arranged side by side, at a connection portion,

Furthermore, since the stabilizer 34 is provided, it is possible to prevent the second fitting portion 32, which is installed on the fixed member 2, from rotating around the fixed member 2.

Moreover, among the second fitting portions 32, for example, each of the second fitting portions 32 provided at both end portions includes a protrusion 32b, which is formed on the inner surface thereof to hold and retain the fixed member 2 fitted to the second fitting portion, as necessary.

Further, it is preferable that the dimension of the second fitting portion 32 in a direction toward the central axis of the pre-installed pipe 1 is larger than the dimension (diameter) of the fixed member 2 by a length in the range of 1 to 15 mm.

Accordingly, when the connection members 3 and the inner surface materials 4 are arranged in the circumferential direction of the pre-installed pipe 1, adjustment can be performed so that a gap caused by the dimension errors or the like in the connection members 3 or the inner surface materials 4 is not generated.

Meanwhile, in this embodiment, the second fitting portion 32, which is installed on the fixed member 2, includes the opening 32a that is formed in the lateral direction (the pipe-axial direction of the pre-installed pipe 1). However, the direction of the opening may be a radial direction (a direction toward the inner peripheral surface of the pre-installed pipe 1) or the second fitting portion 32 may be formed in the shape of a hole without an opening (the fixed member 2 is inserted into the hole).

Further, in this embodiment, the second fitting portions 32, which are installed on the fixed member 2, include the openings 32a that are formed in the same direction, that is, a lateral direction (the pipe-axial direction of the pre-installed pipe 1). However, the directions of the openings 32a of the second fitting portions 32 may be directions that are different from each other by 180° on both sides of a reference point.

Here, it is preferable that the reference point is set near a middle position of the band-like connection member 3 in the longitudinal direction.

Accordingly, it is possible to sequentially and easily fit the second fitting portions 32 to the fixed member 2 by rotating the connection members 3 while using the reference point as a rotation center.

The surfaces of the connection members 3, on which the first fitting portions 31 are formed and which are close to the inner peripheral sides of the connecting pieces 33, are formed so as to be flush with each other.

Accordingly, it is possible to accurately dispose the inner surface materials 4 so that workability is high and unevenness is not formed in the circumferential direction. Specifically, even though the first fitting portion 31 of the connection member 3 is barely seen due to the inner surface material 4, it is possible to specify the position of the first fitting portion 31 of the connection member 3 corresponding to the locking claw 41a of the inner surface material 4 by moving the inner surface material 4 on the connection member 3 in the length direction of the connection member 3.

Further, it is preferable that the intervals between the first fitting portions are set so that the interval varies, for example, intervals L1 between the first fitting portions 31 provided at both end portions and first fitting portions 31 adjacent to the first fitting portions 31 are different from intervals L2 between the adjacent first fitting portions 31 except for the first fitting portions 31 provided at both end portions as in this embodiment.

Accordingly, when the locking claw 41a of the inner surface material 4 is to be fitted to the first fitting portion 31 of the connection member 3 of which the position does not correspond, a positional deviation is generated between the other locking claw 41a of the inner surface material 4 and the first fitting portion 31 of the connection member 3 to which the position does not correspond. For this reason, the inner surface material 4 cannot be fitted to the first fitting portion 31. Accordingly, it is possible to prevent the inner surface material 4 from being incorrectly fitted and to accurately specify the position of the first fitting portion 31 of the connection member 3 corresponding to the locking claw 41a of the inner surface material 4.

The connection member 3 can be disposed so that the position of the connection member 3 can be adjusted along the fixed member 2 with the second fitting portion 32 of the connection member 3.

Meanwhile, the position of the connection member 3 can also be adjusted in the pipe-axial direction of the pre-installed pipe 1 through the second fitting portion 32.

Accordingly, the connection member 3 can be disposed along the fixed member 2 with a degree of freedom.

As described above, the connection members 3 are divided and disposed on one fixed member 2 and include the second fitting portions that allow the connection members to be disposed so that the positions of the connection members can be adjusted along the fixed member 2. Accordingly, the connection members 3 can be accurately disposed on the fixed members 2 assembled in the shape of a closed loop so that the positions of the connection members 3 can be adjusted and can be disposed along the fixed members 2. In addition, the band-like inner surface materials 4 can be provided across the fixed members 2 adjacent to each other in the pipe-axial direction of the pre-installed pipe 1. Thus, the inner surface materials 4 can be accurately disposed so that unevenness is not formed in the pipe-axial direction of the pre-installed pipe 1.

It is preferable that the length of the connection members 3 (the length in a direction along the fixed member 2) is in the range of 60 mm to 2400 mm which is equal to or shorter than 1/2 of the entire circumference of the pre-installed pipe 1, and so that a gap is not formed between the connection members 3 when the connection members 3 are constructed over the entire circumference of the pre-installed pipe 1.

When the length is shorter than 60 mm, it is excessively short and the number of the connection members 3 to be constructed over the entire circumference is excessively large. For this reason, workability deteriorates. Meanwhile, when the length exceeds 2400 mm, it is difficult to fit the connection members 3 to the fixed member 2 and thus workability deteriorates.

When the connection members 3 are formed so as to be divided in the circumferential direction of the pipe as described above, it is preferable that end portions of the connection members 3 adjacent to each other in the circumferential direction of the pipe are connected to each other by a connection piece 35 as shown in Fig. 4.

Both end portions of the connection members 3 may be connected to each other by mounting a connection piece 35, which is shown in Fig. 4(c) or 4(d), in slit-shaped grooves 34a formed at the stabilizers 34 that are provided on the back side of the openings 32a; and may also be fixed and connected to each other by a bolt and a nut, or the like.

Accordingly, it is possible to improve the integrity of the connection members 3 that are connected to each other by the connection piece 35.

In this case, the connection piece 35 may have a function as a spacer that adjusts a distance d (the dimension of the gap) between the end portions of the connection members 3 adjacent to each other in the circumferential direction of the pipe.

For this purpose, a connection piece, which is shown in Fig. 4(c) and includes pinch portions 35b and a contact portion 35c formed at both ends of a shaft portion 35a to be inserted into the slit-shaped groove 34a formed at the stabilizer 34 to regulate the maximum value of the distance d between the end portions of the connection members 3, or a connection piece, which is shown in Fig. 4(d) and includes pinch portions 35b formed at both ends of a shaft portion 35a to regulate the distance d between the end portions of the connection members 3 to a constant value, can be used as the connection piece 35.

Accordingly, a deviation between the dimension of the connection member 3 and the dimension of the inner surface material 4, which is caused by a difference in the curvature (diameter) of the pre-installed pipe 1 on which the connection members 3 and the inner surface materials 4 are mounted, can be absorbed by the connection piece 35 having a function as a spacer, it is possible to reliably fit the inner surface material 4 to the first fitting portions 31 of the connection members 3, and it is possible to improve work efficiency when the inner surface materials 4 are mounted.

Here, a deviation between the dimension of the connection member 3 and the dimension of the inner surface material 4, which is to be absorbed by the connection piece 35, that is, the distance d between end portions of the connection members 3 varies according to the curvature (diameter) of the pre-installed pipe 1, and is set to be about 10 mm in a pre-installed pipe 1 having a diameter of 1000 mm and is set to be about 5 mm in a pre-installed pipe 1 having a diameter of 2000 mm.

Meanwhile, the connection piece 35 is formed of a member separate from the connection member 3, but can be integrally formed on one side of the connection member 3.

In this embodiment, the band-like inner surface materials 4 and the inner surface material-connecting material 5 connecting the inner surface materials 4 are disposed so that the longitudinal directions of the inner surface material 4 and the inner surface material-connecting material 5 are in the pipe-axial direction of the pre-installed pipe 1.

Further, the materials of the inner surface material 4 and the inner surface material-connecting material 5 are not particularly limited, and the inner surface material 4 and the inner surface material-connecting material 5 can be made of a synthetic resin or metal having been subjected to a surface treatment. However, a synthetic resin can be suitably used in consideration of weight, easy manufacture, and the like. Particularly, a synthetic resin having chemical resistance, abrasion resistance, and alkaline resistance is used to repair sewerage pipes. Examples of such a synthetic resin include high-density polyethylene, polypropylene, and polyvinyl chloride. Meanwhile, components made of a synthetic resin, such as high-density polyethylene, polypropylene, or vinyl chloride, can be suitably used to repair members other than sewerage pipes.

The inner surface material 4 and the inner surface material-connecting material 5 can be manufactured using a well-known arbitrary method. When the synthetic resin is a thermoplastic resin or aluminum, the inner surface material 4 and the inner surface material-connecting material 5 can be manufactured by, for example, extrusion molding to obtain a long component.

It is preferable that the width of the inner surface material 4 (the length of the inner surface material 4 in a direction along the fixed member 2) is in the range of 60 mm to 600 mm.

When the width is shorter than 60 mm, it is excessively small and the number of the inner surface materials 4 to be constructed over the entire circumference is excessively large. For this reason, workability deteriorates. Meanwhile, when the width exceeds 600 mm, it may be difficult to carry the inner surface material 4 through a manhole and since the width is excessively large, workability in a small pipe deteriorates.

The lengths of the inner surface material 4 and the inner surface material-connecting material 5 (the lengths in the pipe-axial direction of the pre-installed pipe 1) may be arbitrary, but it is preferable that the lengths are those necessary for repair.

When the length of the inner surface material 4 or the inner surface material-connecting material 5 is shorter than the length required for repair, it is preferable that the inner surface materials 4 or the inner surface material-connecting materials 5 are joined to each other in the longitudinal direction by fusion bonding, adhesion, welding, or the like so that water does not leak from joints.

Well-known methods can be applied as a method of joining the inner surface materials 4 or the inner surface material-connecting materials 5, in accordance with the materials. For example, when the inner surface material 4 or the inner surface material-connecting material 5 is made of a polyolefin-based resin such as polyethylene, the inner surface materials 4 or the inner surface material-connecting materials 5 can be joined to each other by fusion bonding. When the inner surface material 4 or the inner surface material-connecting material 5 is made of polyvinyl chloride, the inner surface materials 4 or the inner surface material-connecting materials 5 can be joined to each other by adhesion. When the inner surface material 4 or the inner surface material-connecting material 5 is made of metal, the inner surface materials 4 or the inner surface material-connecting materials 5 can be joined to each other by welding.

A first wing 40a, which extends so as to close a recessed connection space 40 formed at an end portion of the pre-installed pipe 1 in the circumferential direction, is formed so as to extend from a base end portion of the inner surface material 4.

Accordingly, the first wing 40a improves the water cut-off performance of the connection space 40, absorbs the play of the connection space 40, and resists a force for severing the connection state of the inner surface materials 4, so that the connection state of the inner surface materials 4 connected by the inner surface material-connecting material 5 can be stabilized.

Here, in this embodiment, as shown in Figs. 2(a) and 2(c), a locking claw 40b is formed at an end portion of the inner surface material 4 and the locking claws 40b of adjacent inner surface materials 4 are held by locking claws 5b formed at the inner surface material-connecting material 5, so that the inner surface materials 4 are connected to each other by the inner surface material-connecting material 5.

Further, a water cut-off material 7 is disposed at the inner top portion of the inner surface material-connecting material 5 and comes into contact with tip portions of the locking claws 40b, so that water can be reliably cut off by the inner surface material-connecting material 5.

Furthermore, second wings 5a, which reach the surfaces of the surfaces of the inner surface materials 4, extend from both side portions of the inner surface material-connecting material 5, and thus the connection space 40 is closed by the second wing and a water cut-off performance can be further improved.

Moreover, water cut-off materials 8 having flexibility are disposed from the lower surfaces of the second wings 5a of the inner surface material-connecting material 5 over lower ends of both outer surfaces of the locking claws 5b, so that water can be reliably cut off between the second wing 5a and the inner surface material 4 and between the locking claw 5b and the first wing 40a and the stability of the connection state of the inner surface materials 4 connected by the inner surface material-connecting material 5 can be improved.

The first wings 40a and the water cut-off materials 8 may be omitted as shown in Fig. 3.

Incidentally, in this embodiment, while butting against each other as described above, both end portions of the inner surface materials 4, which are adjacent to each other in the circumferential direction of the pre-installed pipe 1, in the circumferential direction of the pre-installed pipe 1 are connected to each other through the inner surface material-connecting material 5. However, as shown in Fig. 2(d), the inner surface materials 4, which are adjacent to each other in the circumferential direction of the pre-installed pipe 1, can also be connected to each other through fitting portions 42 and 43 that are formed at both end portions of the inner surface materials 4 in the circumferential direction of the pre-installed pipe 1.

Even in this case, a first wing 40a, which extends so as to close the recessed connection space 40 formed at the end portion of the pre-installed pipe 1 in the circumferential direction, can be formed so as to extend from the base end portion of the inner surface material 4.

Accordingly, the first wing 40a improves the water cut-off performance of the connection space 40, absorbs the play of the connection space 40, and resists a force for severing the connection state of the inner surface materials 4, so that the connection state of the inner surface materials 4 can be stabilized.

Here, a locking claw 42a is formed at a fitting portion 42 of the inner surface material 4 and the locking claw 42a is held by a locking claw 43a formed at a fitting portion 43 of an adjacent inner surface material 4, so that the inner surface materials 4 are connected to each other.

Further, a water cut-off material 7 is disposed on the inner top portion of the fitting portion 43 of the inner surface material 4 and comes into contact with the tip of the locking claw 43a, so that water can be reliably cut off by the fitting portions 42 and 43.

A second wing 40c, which reaches the surface of the other adjacent inner surface material 4, is formed on the fitting portion 43 of one inner surface material 4 so as to extend from the base end portion of the inner surface material 4. Accordingly, the second wing 40c closes the connection space 40, so that water cut-off performance can be further improved.

Incidentally, for example, after the connection members 3 are disposed on the fixed member 2 as shown in Fig. 5(b), the inner surface materials 4 are put in the pre-installed pipe 1 through the manhole 11 while the inner surface materials 4 are sequentially joined to each other in the longitudinal direction outside a manhole 11 by fusion bonding, adhesion, welding, or the like as shown in Fig. 5(c). As a result, work for fitting the inner surface material 4 to the first fitting portion 31 of the connection member 3 is performed.

Here, in an example shown in Figs. 5 and 6(d), after fixed members 2, lower connection members 3, and inner surface materials 4 of a lower half of the pre-installed pipe 1 are completely installed in this order, fixed members 2, side and upper connection members 3, and inner surface materials 4 of an upper half of the pre-installed pipe 1 are installed in the same order. However, in other division methods, fixed members 2, connection members 3, and inner surface materials 4 are installed in this order, or fixed members 2, connection members 3, and inner surface materials 4 are installed in this order over the entire circumference of the pre-installed pipe 1, that is, the order of the installation of the respective members can be arbitrarily determined.

Further, as shown in Fig. 6(e), end edges of adjacent inner surface materials 4 are connected to each other by an inner surface material-connecting material 5 that is fitted so as to be retained, the treatment of the inner surface materials 4 and both end portions of the inner surface material-connecting material 5 in the pipe-axial direction of the pre-installed pipe 1 are performed, mortar 6 is then injected into annular gaps partitioned by the inner peripheral surface of the pre-installed pipe 1 and the inner surface materials 4 as shown in Fig. 6(f) and is hardened, and construction is completed.

The pipe inner-layer structure of the invention and the connection member used in the pipe inner-layer structure have been described above on the basis of the embodiment of the invention. However, the invention is not limited to the structure described in the embodiment, and the structure may be appropriately modified without departing from the scope of the invention.

### Industrial Applicability

It is possible to provide a pipe inner-layer structure which exhibits long-term durability even after work completion, and which simplifies installation work by saving labor required for assembling component members including an inner surface material, while enabling the inner surface material to be accurately disposed. Accordingly, the pipe inner-layer structure of the invention and the connection member used therein can be suitably used for the use of the repair of a pre-installed pipe such as a decrepit sewerage pipe, and can also be used in, for example, the finishing of the inner surface of a newly-constructed pipe.

### Reference Signs List

- 1:: pre-installed pipe
- 2:: fixed member
- 21:: fixing member
- 3:: connection member
- 31:: first fitting portion
- 31a:: locking claw
- 32:: second fitting portion
- 33:: connecting piece
- 34:: stabilizer
- 35:: connection piece
- 4:: inner surface material
- 40:: connection space
- 40a:: first wing
- 40b:: locking claw
- 40c:: second wing
- 41a:: locking claw
- 5:: inner surface material-connecting material
- 5a:: second wing
- 6:: mortar
- 7:: water cut-off material
- 8:: water cut-off material

## Claims

1. A pipe (1) comprising a pipe inner-layer structure, comprising:
fixed members (2) that are installed along an inner peripheral surface of the pipe (1) at intervals in a pipe-axial direction;
connection members (3) that are disposed on the fixed members (2) and include first fitting portions (31) to which an inner surface material (4) is fitted; and
the inner surface material (4) in a shape of a band, which is fitted to the first fitting portions (31) of the connection members (3) and is provided across fixed members (2) adjacent to each other in the pipe-axial direction,
wherein the connection members (3) are adapted so as to be divided and disposed on the fixed members (2) and include second fitting portions (32) for installing the connection members (3) on the fixed members (2).

2. The pipe according to claim 1,
wherein the connection members (3) are disposed so that the positions of the connection members (3) are adjusted along the fixed member by the second fitting portion (32).

3. The pipe according to claim 1 or 2,
wherein surfaces of the connection members (3) on which the first fitting portions (31) are formed are formed so as to be flush with each other.

4. The pipe according to claim 1, 2, or 3,
wherein each of the connection members (3) includes a plurality of second fitting portions (32).

5. A connection member (3) suitable for use in a pipe inner-layer structure, which is to be used to join a fixed member installed along an inner peripheral surface of a pipe to an inner surface material, the connection member comprising:
a first fitting portion (31) which is formed in a shape of a band as a whole and to which the inner surface material (4) is to be fitted; and
a second fitting portion (32) that is to be installed on the fixed member (2),
**characterized in that**
a fitting direction of the first fitting portion (31) and a fitting direction of the second fitting portion (32) are directions orthogonal to each other,
wherein the first fitting portion (31) has a locking claw (31a) which is to be engaged with a locking claw (41a) of the inner surface material,
wherein the connection member (3) includes a plurality of first (31) and second (32) fitting portions, and
the first and second fitting portions are provided at the same positions in a longitudinal direction of the band-like connection member,
wherein the second fitting portion (32) includes a U-shaped groove that is to be fitted to the fixed member (2), the U-shaped groove having an opening (32a) to which the fixed member (2) is fitted, and
the connection member further comprises a stabilizer (34) formed along an outer surface of the second fitting portion (32), the U-shaped groove being entirely within the stabilizer (34).

6. The connection member according to claim 5,
wherein the connection member (3) includes a plurality of second fitting portions (32), and
opening directions of U-shaped grooves of the respective second fitting portions (32) are directions that are different from each other by 180□ on both sides of a reference point.

7. The connection member according to claim 5 or 6,
wherein the U-shaped groove of the second fitting portion (32) has a length that allows the U-shaped groove to be fitted to two fixed members (2) arranged side by side.

8. The connection member according to claim 5, 6, or 7,
wherein connection members (3) are integrally connected to each other in a circumferential direction of a pipe by a connection piece (35).

9. The connection member according to claim 8,
wherein the connection piece (35) has a function as a spacer that adjusts a distance between end portions of connection members (3) adjacent to each other in a circumferential direction of the pipe (1).

## Patentansprüche

1. Rohr (1), das eine Rohrinnenschichtstruktur umfasst, umfassend:
starre Elemente (2), die entlang einer inneren Peripherfläche des Rohres (1) in Abständen in einer rohraxialen Richtung installiert sind;
Verbindungselemente (3), die auf den starren Elementen (2) angeordnet sind und erste Passabschnitte (31) beinhalten, an denen ein Innenflächenmaterial (4) angebracht ist; und
das Innenflächenmaterial (4) in einer Form eines Bandes, das an den ersten Passabschnitten (31) der Verbindungselemente (3) angebracht und über starre Elemente (2) benachbart zueinander in der rohraxialen Richtung bereitgestellt ist,
wobei die Verbindungselemente (3) ausgelegt sind, um auf den starren Elementen (2) aufgeteilt und angeordnet zu werden, und zweite Passabschnitte (32) zum Installieren der Verbindungselemente (3) auf den starren Elementen (2) einschließen.

2. Rohr nach Anspruch 1,
wobei die Verbindungselemente (3) derart angeordnet sind, dass die Positionen der Verbindungselemente (3) entlang des starren Elements von dem zweiten Passabschnitt (32) eingestellt werden.

3. Rohr nach Anspruch 1 oder 2,
wobei Flächen der Verbindungselemente (3), auf denen die ersten Passabschnitte (31) ausgebildet sind, ausgebildet sind,abs sodass sie bündig miteinander sind.

4. Rohr nach Anspruch 1, 2 oder 3,
wobei jedes der Verbindungselemente (3) eine Vielzahl zweiter Passabschnitte (32) einschließt.

5. Verbindungselement (3), das zur Verwendung in einer Rohrinnenschichtstruktur geeignet ist, das zu verwenden ist, um ein starres Element, das entlang einer inneren Peripherfläche eines Rohres installiert ist, mit einem Innenflächenmaterial zu verbinden, wobei das Verbindungselement umfasst:
einen ersten Passabschnitt (31), der in einer Form eines Bandes als ein Ganzes ausgebildet ist und an den das Innenflächenmaterial (4) anzubringen ist; und
einen zweiten Passabschnitt (32) der an dem starren Element (2) zu installieren ist,
**dadurch gekennzeichnet, dass**
eine Passrichtung des ersten Passabschnitts (31) und eine Passrichtung des zweiten Passabschnitts (32) Richtungen orthogonal zueinander sind,
wobei der erste Passabschnitt (31) eine Verriegelungsklaue (31a) aufweist, die mit einer Verriegelungsklaue (41a) des Innenflächenmaterials in Eingriff zu bringen ist,
wobei das Verbindungselement (3) eine Vielzahl erster (31) und zweiter (32) Passabschnitte einschließt, und
der erste und der zweite Passabschnitt an den gleichen Positionen in einer Längsrichtung des bandartigen Verbindungselements bereitgestellt werden,
wobei der zweite Passabschnitt (32) eine U-förmige Nut einschließt, die an das starre Element (2) anzubringen ist, wobei die U-förmige Nut eine Öffnung (32a) aufweist, an die das starre Element (2) angebracht wird, und
das Verbindungselement weiter einen Stabilisator (34) umfasst, der entlang einer äußeren Fläche des zweiten Passabschnitts (32) ausgebildet ist, wobei die U-förmige Nut sich vollständig innerhalb des Stabilisators (34) befindet.

6. Verbindungselement nach Anspruch 5,
wobei das Verbindungselement (3) eine Vielzahl zweiter Passabschnitte (32) einschließt, und
Öffnungsrichtungen der U-förmigen Nuten der jeweiligen zweiten Passabschnitte (32) Richtungen sind, die voneinander um 180° auf beiden Seiten eines Referenzpunktes unterschiedlich sind.

7. Verbindungselement nach Anspruch 5 oder 6,
wobei die U-förmige Nut des zweiten Passabschnitts (32) eine Länge aufweist, die es der U-förmigen Nut ermöglicht, an zwei starre Elemente (2), die Seite an Seite angeordnet sind, angebracht zu werden.

8. Verbindungselement nach Anspruch 5, 6 oder 7,
wobei Verbindungselemente (3) integral miteinander in einer Umfangsrichtung eines Rohres durch ein Verbindungsstück (35) verbunden sind.

9. Verbindungselement nach Anspruch 8,
wobei das Verbindungsstück (35) eine Funktion als ein Abstandshalter aufweist, der einen Abstand zwischen Endabschnitten von Verbindungselementen (3), die in einer Umfangsrichtung des Rohres (1) benachbart zueinander sind, einstellt.

## Revendications

1. Tuyau (1) comprenant une structure de couche interne de tuyau, comprenant :
des éléments fixes (2) qui sont installés le long d'une surface périphérique interne du tuyau (1) à des intervalles dans une direction axiale du tuyau ;
des éléments de raccordement (3) qui sont disposés sur les éléments fixes (2) et incluent des premières parties d'adaptation (31) sur lesquelles un matériau de surface interne (4) est adapté ; et
le matériau de surface interne (4) en forme de bande, qui est adapté sur les premières parties d'adaptation (31) des éléments de raccordement (3) et est prévu entre des éléments fixes (2) adjacents les uns aux autres dans la direction axiale du tuyau,
dans lequel les éléments de raccordement (3) sont adaptés de façon à être divisés et disposés sur les éléments fixes (2) et incluent des secondes parties d'adaptation (32) pour l'installation des éléments de raccordement (3) sur les éléments fixes (2).

2. Tuyau selon la revendication 1,
dans lequel les éléments de raccordement (3) sont disposés de sorte que les positions des éléments de raccordement (3) sont ajustées le long de l'élément fixe par la seconde partie d'adaptation (32).

3. Tuyau selon la revendication 1 ou 2,
dans lequel les surfaces des éléments de raccordement (3) sur lesquels les premières parties d'adaptation (31) sont formées sont formées de façon à être au même niveau les unes que les autres.

4. Tuyau selon la revendication 1, 2, ou 3,
dans lequel chacun des éléments de raccordement (3) inclut une pluralité de secondes parties d'adaptation (32).

5. Élément de raccordement (3) approprié pour une utilisation dans une structure de couche interne de tuyau, qui doit être utilisé pour relier un élément fixe installé le long d'une surface périphérique interne d'un tuyau à un matériau de surface interne, l'élément de raccordement comprenant :
une première partie d'adaptation (31) qui est formée en forme de bande dans l'ensemble et sur laquelle le matériau de surface interne (4) doit être adapté ; et
une seconde partie d'adaptation (32) qui doit être installée sur l'élément fixe (2),
**caractérisé en ce que**
une direction d'adaptation de la première partie d'adaptation (31) et une direction d'adaptation de la seconde partie d'adaptation (32) sont des directions orthogonales l'une à l'autre,
dans lequel la première partie d'adaptation (31) comporte une fourche de verrouillage (31a) qui doit être mise en prise avec une fourche de verrouillage (41a) du matériau de surface interne,
dans lequel l'élément de raccordement (3) inclut une pluralité de premières (31) et secondes (32) parties d'adaptation, et
les premières et secondes parties d'adaptation sont prévues au niveau des mêmes positions dans une direction longitudinale de l'élément de raccordement de type bande,
dans lequel la seconde partie d'adaptation (32) inclut une rainure en forme de U qui doit être adaptée sur l'élément fixe (2), la rainure en forme de U comportant une ouverture (32a) sur laquelle l'élément fixe (2) est adapté, et
l'élément de raccordement comprend en outre un stabilisateur (34) formé le long d'une surface externe de la seconde partie d'adaptation (32), la rainure en forme de U étant entièrement à l'intérieur du stabilisateur (34).

6. Élément de raccordement selon la revendication 5,
dans lequel l'élément de raccordement (3) inclut une pluralité de secondes parties d'adaptation (32), et
les directions d'ouverture des rainures en forme de U des secondes parties d'adaptation (32) respectives sont des directions qui sont différentes les unes des autres de 180° des deux côtés d'un point de référence.

7. Élément de raccordement selon la revendication 5 ou 6,
dans lequel la rainure en forme de U de la seconde partie d'adaptation (32) a une longueur qui permet à la rainure en forme de U d'être adaptée sur deux éléments fixes (2) agencés côte à côte.

8. Élément de raccordement selon la revendication 5, 6 ou 7,
dans lequel les éléments de raccordement (3) sont intégralement raccordés les uns aux autres dans une direction circonférentielle d'un tuyau par une pièce de raccordement (35).

9. Élément de raccordement selon la revendication 8,
dans lequel la pièce de raccordement (35) a une fonction d'entretoise qui ajuste une distance entre les parties d'extrémité des éléments de raccordement (3) adjacents les uns aux autres dans une direction circonférentielle du tuyau (1).
